# EUROPÄISCHE PATENTSCHRIFT

(11) **EP 3 535 205 B1**
(45) Veröffentlichungstag und Bekanntmachung des Hinweises auf die Patenterteilung: **07.01.2026**
(21) Anmeldenummer: 17808307.7
(22) Anmeldetag: 03.11.2017
(51) Int. Cl.: B65G 1/137

(54) **FLEXIBLES UND KOMPAKTES KOMMISSIONIERSYSTEM**
FLEXIBLE AND COMPACT ORDER-PICKING SYSTEM
SYSTÈME DE PRÉPARATION DE COMMANDES FLEXIBLE ET COMPACT

(30) Priorität: 04.11.2016 DE 102016121130
(43) Veröffentlichungstag der Anmeldung: 11.09.2019
(73) Patentinhaber: Witron Logistik + Informatik GmbH, 92711 Parkstein (DE)
(72) Erfinder: WINKLER, Walter, 92711 Parkstein (DE)
(74) Vertreter: Esslinger, Alexander
(86) Internationale Anmeldenummer: PCT/DE2017/100935
(87) Internationale Veröffentlichungsnummer: WO 2018/082749

(56) Entgegenhaltungen:
- EP-A2- 0 943 561
- WO-A1-2012/069327
- WO-A1-2012/103566
- WO-A1-2016/113230
- DE-A1- 102014 109 863
- DE-U1- 202004 008 679

## Beschreibung

### HINTERGRUND DER ERFINDUNG

### GEBIET DER ERFINDUNG

Die vorliegende Erfindung betrifft ein Verfahren sowie eine Anlage zur Kommissionierung von Waren.

### STAND DER TECHNIK

In vielen Bereichen von Industrie und Handel müssen Waren, die in großen Gebinden sortenrein angeliefert werden, kommissioniert werden, um in kleineren Verpackungseinheiten zusammen mit anderen Waren an bestimmten Orten bereitgestellt zu werden. Dies kann beispielsweise bei der Versorgung von Arbeitsplätzen mit zu montierenden Komponenten bei der industriellen Montage von Produkten oder bei der Versorgung von Einzelhandelsfilialen mit Waren aus einem zentralen Warenlager bzw. beim Versand von Waren an Endkunden im Online - Handel der Fall sein.

Allerdings können die Kommissionieraufgaben sehr unterschiedlich sein, beispielsweise hinsichtlich der Anzahl der zu kommissionierenden Waren insgesamt und bezüglich der verschiedenen Arten von Waren, der Häufigkeit der Kommissionierung insgesamt und der einzelnen Waren etc. Entsprechend sind im Stand der Technik auch bereits eine Vielzahl von unterschiedlichen Kommissionierverfahren und Einrichtungen zur Kommissionierung von Waren bekannt. Die Herausforderung bei den verschiedensten Kommissionieraufgaben besteht nun darin, dass zur Erzielung einer hohen Kommissionierleistung bei einer effizienten Durchführung der Kommissionierung je nach den gestellten Anforderungen und Rahmenbedingungen das am besten geeignete Kommissionierverfahren sowie der Einsatz entsprechend geeigneter Vorrichtungen gefunden werden müssen. Da aber die Kommissionieraufträge üblicherweise nicht immer gleich sind, sondern beispielsweise abhängig vom Verkauf und variierendem Angebot von Waren in Einzelhandelsfilialen sehr unterschiedlich sein können, besteht ein Bedarf flexible und kompakte Kommissioniersysteme anzubieten, die flexibel auf unterschiedliche Kommissionieranforderungen reagieren können und einen effizienten Einsatz von Vorrichtungen für die Kommissionierung sowie von Lager - und Fördersystemen in einem Kommissioniersystem ermöglichen.

Die WO 2012/103566 A1 offenbart ein Verfahren und eine Anlage zum Kommissionieren von Artikeln unterschiedlicher Umschlaghäufigkeit aus Lagerbehältern in Auftragsbehälter, bei dem die Lagerbehälter durch eine erste Fördertechnik von einem Behälterlager zu Kommissionier-Arbeitsplätzen in unterschiedlichen Kommissionierbereichen gefördert und an welchen jeweils von einer Kommissionierperson zu einem Kommissionierauftrag ein Artikel aus zumindest einem Lagerbehälter entnommen und in einem durch eine zweite Fördertechnik bereitgestellten Auftragsbehälter abgelegt wird. Es werden von einem Lagerverwaltungs-System in einer Auftragsvorausschau über eine Anzahl von Kommissionieraufträgen die Auftragspositionen zu je einem Artikel ermittelt und in einer Dispositionsprüfung die Lagerbehälter einem im Behälterlager integriert angeordneten Kommissionier-Arbeitsplatz im ersten Kommissionierbereich und/oder einem vom Behälterlagergetrennt angeordneten Kommissionier-Arbeitsplatz im zweiten Kommissionierbereich zugewiesen. Dementsprechend werden die Lagerbehälter auf unterschiedlichen, automatisierten Förderwegen entweder zu einem Kommissionier-Arbeitsplatz im ersten Kommissionierbereich oder zu einem Kommissionier-Arbeitsplatz im zweiten Kommissionierbereich transportiert.

Die WO 2012/069327 A1 offenbart ein Kommissionierverfahren und -system. Beim Kommissionieren von in einem Regallager gelagerten Produkten werden die Produkte mittels eines Fördertechniksystems zu manuellen Ware-zur-Person-Kommissionierstationen transportiert. Den Ware-zur-Person-Kommissionierstationen sind Auftragstransporteinheiten zuführbar, in die den Ware-zur-Person-Kommissionierstationen zugeführte Produkte manuell gemäß Kommissionieraufträgen kommissioniert werden. Es sind allen Ware-zur-Person-Kommissionierstationen alle manuell zu kommissionierenden Produkte des Regallagers zuführbar. Falls ein Kommissionierauftrag manuell zu kommissionierende Produkte enthält, wird diesen manuell zu kommissionierenden Produkten zumindest eine Auftragstransporteinheit zugeordnet, wobei jede Auftragstransporteinheit nur zu einer manuellen Ware-zur-Person-Kommissionierstation zugeführt wird, an der alle dieser Auftragstransporteinheit zugeordneten manuell zu kommissionierenden Produkte kommissioniert werden. Die jeweilige Auftragstransporteinheit wird erst dann zu der manuellen Ware-zur-Person-Kommissionierstation transportiert, wenn diese Kommissionierstation zur Befüllung mit Produkten gemäß einem Kommissionierauftrag bereit ist.

Die WO 2016/113230 A1 offenbart ein Sequenzierungssystem, das so konfiguriert ist, dass es Ladungen, die von mindestens einer externen Einheit stammen, über mindestens ein eingehendes Vorwärtsförderband sequenziert und über mindestens ein ausgehendes Vorwärtsförderband mindestens einer Vorbereitungsstation eine Sequenz mit Ladungen bereitstellt. Das System umfasst einen Paternoster, mindestens einen Pufferplatz und eine Steuereinheit, die so konfiguriert ist, dass sie jede am Eingang des Paternosters ankommende Ladung auf eine der folgenden Arten verarbeitet: Nach dem Einführen in den Paternoster (a) wird die Ladung einem Abkürzungstransfer zwischen zwei einander gegenüberliegenden Trägern unterzogen; (b) die Ladung wird mindestens einem Puffertransfer zu einem bestimmten Pufferplatz unterzogen; (c) die Ladung wird darin ohne Abkürzungstransfer oder Puffertransfer transportiert und dann dem mindestens einen abgehenden Vorwärtsförderer zugeführt.

### OFFENBARUNG DER ERFINDUNG

Die Erfindung wird durch die unabhängigen Ansprüche definiert. Die abhängigen Ansprüche spezifizieren Ausführungsformen davon.

### AUFGABE DER ERFINDUNG

Es ist deshalb Aufgabe der vorliegenden Erfindung ein Verfahren sowie eine Anlage zur Kommissionierung von Waren bereitzustellen, bei welchen die Anlage zur Erzielung einer effizienten und kostengünstigen Kommissionierung ein kompaktes Design aufweist und eine effiziente Kommissionierung mit flexibler Anpassung an unterschiedliche Kommissionierbedürfnisse ermöglicht.

### TECHNISCHE LÖSUNG

Zur Lösung dieser Aufgabe werden eine Anlage mit den Merkmalen des Anspruchs 1 sowie ein Verfahren mit den Merkmalen des Anspruchs 10 vorgeschlagen. Vorteilhafte Ausgestaltungen sind Gegenstand der abhängigen Ansprüche.

Gemäß der Erfindung werden ein Verfahren und eine Anlage bereitgestellt, bei denen zwei unterschiedliche Kommissionierprinzipien miteinander kombiniert werden, um abhängig von den Kommissionieranforderungen flexibel zwischen den unterschiedlichen Kommissionierarten wechseln zu können. Gleichzeitig werden die unterschiedlichen Kommissionierarten in einer kompakten Anlage kombiniert, die einen geringen Platzbedarf mit kurzen Transportwegen für die Waren aufweist und somit eine effiziente Kommissionierung ermöglicht.

Basis der technischen Lösung ist ein automatisches Kleinteilelager (KTL), in dem die zu kommissionierenden Waren in Lagereinheiten, vorzugsweise speziellen für das KTL hergerichteten Lagereinheiten, gelagert und für die Kommissionierung vorgehalten werden. Entsprechend können in dem Kleinteilelager (KTL) üblicherweise Lagereinheiten mit sortenreinen Waren, die gemäß Kommissionieraufträgen kommissioniert werden sollen, gelagert werden.

Unter Lagereinheiten werden hierbei sämtliche Formen von Behältern, wie Kartons, Kisten oder dergleichen sowie Tablare, Paletten oder sonstige Vorrichtungen, die zur Aufnahme von Waren geeignet sind, verstanden.

Über Lagerbediengeräte können die im KTL vorgehaltenen Waren automatisch in das KTL eingelagert und aus diesem ausgelagert werden, um für die Kommissionierung zur Verfügung zu stehen. Für die Einlagerung der Waren in Lagereinheiten in das KTL und für die Kommissionierung insgesamt ist eine Steuerungseinrichtung in Form einer Datenverarbeitungsanlage vorgesehen, mit der Kommissionieraufträge erfasst und automatisiert bearbeitet werden können. Entsprechend wird bei der Bearbeitung eines Kommissionierauftrags von der Steuerungseinheit bestimmt, wie die bestellten und zu kommissionierenden Waren in einer Versandeinheit zum Versand der Ware zusammengestellt werden müssen und welche Waren aus dem KTL für die Kommissionierung ausgelagert werden müssen. Hierbei können je nach Größe des Kommissionierauftrags in einer Versandeinheit ein oder mehrere Ausgangseinheiten mit den kommissionierten Waren enthalten sein, wobei unter Ausgangseinheiten wiederum sämtliche Formen von Behältern, wie Kartons, Kisten oder dergleichen sowie Tablare, Paletten oder sonstige Vorrichtungen, die zur Aufnahme von Waren geeignet sind, verstanden werden.

Für die Kommissionierung sind nun an und / oder in dem Kleinteilelager mindestens zwei verschiedene Arten von Kommissioniereinrichtungen vorgesehen, an denen die mindestens zwei verschiedenen Arten der Kommissionierung der Waren, also die Überführung einer bestimmten Anzahl und Art von Waren aus den Lagereinheiten in die Ausgangseinheiten, durchgeführt werden können.

Zum einen sind für eine erste Art der Kommissionierung mindestens ein, vorzugsweise mehrere ortsfeste Kommissionierplätze vorgesehen, zu denen sowohl die Lagereinheiten mit den eingelagerten Waren als auch Ausgangseinheiten zur Aufnahme der kommissionierten Waren angeliefert werden, sodass ein am ortsfesten Kommissionierplatz tätiger Kommissionierer die gemäß Kommissionierauftrag erforderliche Anzahl von Waren aus den angelieferten Lagereinheiten in die Ausgangseinheit überführen kann. Zur Überführung der verschiedenen Waren in die Ausgangseinheit werden die erforderlichen unterschiedlichen Lagereinheiten mit den verschiedenen Waren der Reihe nach zu dem ortsfesten Kommissionierplatz angeliefert, wozu eine Lagereinheitenbereitstellungsfördertechnik bereitgestellt werden kann, die die von den Lagerbediengeräten aus dem KTL ausgelagerten Lagereinheiten zum ortsfesten Kommissionierplatz transportieren kann. Welche der Lagereinheiten wann mit welchen Waren an dem ortsfesten Kommissionierplatz angeliefert werden, sodass eine bestimmte Anzahl der Waren in eine der angelieferten Ausgangseinheiten überführt werden kann, wird von der Steuerungseinheit bestimmt, die gemäß dem Kommissionierauftrag die Anlage so steuert, dass die erforderlichen Lagereinheiten mit den gewünschten Waren passgenau zu dem mindestens einen ortsfesten Kommissionierplatz angeliefert werden, wenn die Ausgangseinheit, in die die Waren kommissioniert werden sollen, ebenfalls an dem entsprechenden ortsfesten Kommissionierplatz vorliegt. Ein derartiges Kommissionierverfahren, bei dem die Ware zum Kommissionierer geliefert wird, soll nachfolgend auch als erstes Teil - oder Subsystem (ESS)" bezeichnet werden.

In Kombination mit dem Kleinteilelager, welches vorzugsweise als Hochregallager ausgeführt sein kann, können die entsprechenden ortsfesten Kommissionierplätze für das ESS an den Stirnseiten von Regalgassen angeordnet sein, in denen Lagerbediengeräte bzw. Regalfahrzeuge die notwendigen Lagereinheiten mit den darin enthaltenen, zu kommissionierenden Waren auslagern, gegebenenfalls an eine Lagereinheitenbereitstellungsfördereinrichtung zum Transport der Lagereinheiten an den ortsfesten Kommissionierplatz übergeben und nach der erfolgten Kommissionierung die Lagereinheiten mit den darin verbleibenden Waren wieder in das KTL einlagern können. Entsprechend können die Transportwege kurz gehalten werden. Zusätzlich kann zwischen KTL mit den Lagerplätzen und den Lagerbediengeräten und den ortsfesten Kommissionierplätzen des ESS ein sogenannter Sequenzpuffer vorgesehen werden, um eine verzögerungsfreie und korrekte Bereitstellung der Lagereinheiten am ortsfesten Kommissionierplatz zu ermöglichen.

Der Abtransport der Ausgangseinheiten, in die kommissioniert worden ist, kann von den ortsfesten Kommissionierplätzen des ESS über eine Ausgabefördertechnik zu einer Stapel - und / oder Packstation für den Versand der Ausgangseinheiten oder über eine Zwischenlagerfördertechnik in das KTL zur Zwischenlagerung bzw. Pufferung der fertig oder teilweise kommissionierten Ausgangseinheiten im KTL oder über eine Förderbahn erfolgen, die bereits Teil einer weiteren Art der Kommissionierung in der erfindungsgemäßem Anlage ist.

Die mindestens zweite Art der Kommissionierung, die bei der vorliegenden Erfindung im Zusammenhang mit dem gleichen KTL eingesetzt wird, wie das ESS, verwendet mindestens einen Kommissionierbereich, vorzugsweise mehrere Kommissionierbereiche, sogenannte Pick - Bahnhöfe. Bei dieser Art der Kommissionierung werden die Ausgangseinheiten, in die kommissioniert wird, in den Kommissionierbereichen, den sogenannte Pick - Bahnhöfen bereitgestellt, an denen ein Kommissionierer aus verschiedenen in Bereitstellungsplätzen bereitgestellten Lagereinheiten die gewünschten Waren entnehmen und in die Ausgangseinheit überführen kann. Diese Art von Kommissionierung beruht somit grundsätzlich auf dem System Kommissionierer zur Ware, da der Kommissionierer die Ware von den Bereitstellungsplätzen der Lagereinheiten an den Pick - Bahnhöfen abholen muss und in die bereitgestellten Ausgangseinheiten kommissionieren muss. Dieses Kommissionierprinzip wird im Folgenden auch zweites Teil - oder Subsystem (ZSS) genannt

Die Ausgangseinheit kann bei der Kommissionierung gemäß dem ZSS entlang einer Förderbahn an den Bereitstellungsplätzen des mindestens einen Kommissionierbereichs vorbei bewegt werden oder zumindest auf der Förderbahn aus dem Kommissionierbereich abtransportiert werden, und zwar entweder zu einem weiteren Pick - Bahnhof bzw. Kommissionierbereich, in dem weitere Waren in die Ausgangseinheit kommissioniert werden, oder zu einem Kommissionierplatz des ESS, wo ebenfalls weitere Waren gemäß dem Kommissionierauftrag in die Ausgangseinheit kommissioniert werden können, oder zur Zwischenlagerung in das KTL bis eine weitere Kommissionierung erfolgen kann oder weitere Ausgangseinheiten der Versandeinheit des Kommissionierauftrags fertig kommissioniert sind. Alternativ kann die Ausgangseinheit auf der Förderbahn auch direkt zu einer Ausgabefördertechnik transportiert werden, mit der die Ausgangseinheit zu einer Stapel - und /oder Packstation transportiert wird, wo die Ausgangseinheit möglicherweise mit anderen Ausgangseinheiten zu einer Versandeinheit gestapelt und / oder verpackt werden kann. Selbstverständlich ist auch der umgekehrte Weg von der ESS - Kommissionierung zur ZSS - Kommissionierung möglich.

Bei der Kommissionierung in den Kommissionierbereichen ist anders als beim ESS, das grundsätzlich das System Ware zum Kommissionierer verwendet, kein ortsfester Kommissionierplatz gegeben, da der Kommissionierer die Ware an den verschiedenen Bereitstellungsplätzen der Lagereinheiten abholen muss und dabei die Ausgangseinheit, in die kommissioniert wird, entlang der Förderbahn mitführt oder der automatisch auf der Förderbahn transportierten Ausgangseinheit folgt. Allerdings kann der Kommissionierbereich und somit der Bewegungsbereich eines Kommissionierers durch eine geeignete Anordnung der Bereitstellungsplätze und eine geschickte Auswahl der dort in den Lagereinheiten bereitgestellten Waren sehr klein gehalten werden, sodass bei kurzen Kommissionierbereichen auch die Kommissionierung in eine stehende Ausgangseinheit denkbar ist.

Darüber hinaus werden auch an den Pick - Bahnhöfen die zu kommissionierenden Waren mit den Lagereinheiten automatisiert aus dem KTL bereitgestellt, jedoch gleichzeitig in mehreren Bereitstellungsplätzen. Die Bereitstellung der Lagereinheiten in den Bereitstellungsplätzen kann statisch oder dynamisch erfolgen. Bei der statischen Bereitstellung der Lagereinheiten, werden die Waren ständig in Bereitstellungsplätzen bereitgestellt und, wenn eine Lagereinheit geleert ist, wird eine neue Lagereinheit mit den gleichen Waren im gleichen Bereitstellungsplatz bereitgestellt. Bei der dynamischen Bereitstellung werden die Waren in den Bereitstellungsplätzen nicht dauerhaft bereitgestellt, sondern zeitweilig je nach Bedarf.

Bei der erfindungsgemäßen Anlage können die sogenannten Pick - Bahnhöfe des ZSS entlang einer oder mehrerer Regalreihen des KTL angeordnet sein, wobei die Bereitstellungsplätze für die Lagereinheiten im unteren Bereich eines Regals vorgesehen sein können. An der dem Pick - Bahnhof bzw. den Bereitstellungsplätzen der Lagereinheiten gegenüberliegenden Seite eines entsprechenden Regals kann ein Regalfahrzeug bereitgestellt werden, welches die Lagereinheiten aus den Lagerplätzen des KTL entnehmen und in den Bereitstellungsplätzen des Pick - Bahnhofs bereitstellen kann. Die Anlieferung der Ausgangseinheiten an die Pick - Bahnhöfe kann über die Förderbahn erfolgen, welche die Ausgangseinheiten entlang oder innerhalb eines oder mehrerer Regale transportiert und mehrere Pick - Bahnhöfe miteinander sowie diese mit den Kommissionierplätzen des ESS verbindet.

Die Förderbahn kann insbesondere im Bereich der Kommissionierbereiche mehrere, insbesondere zwei Transportbahnen parallel zueinander aufweisen, sodass Ausgangseinheiten auf einer Transportbahn an dem Kommissionierbereich vorbei transportiert werden können, während auf der parallelen Transportbahn die Ausgangseinheiten bewegt werden, in die aktuell in dem Kommissionierbereich kommissioniert wird.

Unter Transportbahn wird im Rahmen dieser Beschreibung der vorliegenden Erfindung jede Vorrichtung verstanden, die dazu dienen kann, Ausgangseinheiten zu befördern bzw. zu transportieren, wie Transportbänder, Rollenförderer oder andere horizontale Fördereinrichtungen, aber auch Einrichtungen, die eine vertikale Transportbewegung der Ausgangseinheiten ermöglichen können.

Darüber hinaus ist die Förderbahn zum Transport von Ausgangseinheiten nicht nur zur Anlieferung von Ausgangseinheiten an die Pick - Bahnhöfe eingerichtet, wobei über die Förderbahn verschiedene Pick - Bahnhöfe verbunden sein können. Vielmehr ist die Förderbahn, wie bereits oben erwähnt, auch so ausgebildet, dass über die Förderbahn Pick - Bahnhöfe und Kommissionierplätze verbunden sind, um so eine Ausgangseinheit nicht nur an verschiedenen Pick - Bahnhöfen kommissionieren zu können, sondern auch an Kommissionierplätzen. Darüber hinaus kann die Förderbahn für Ausgangseinheiten weiterhin so ausgebildet sein, dass sie mit einer Zwischenlagerfördertechnik zusammenwirken kann, sodass Ausgangseinheiten zu Ein - und / oder Auslagerungsstellen für das KTL transportiert werden können, an denen die Ausgangseinheiten an Lagerbediengeräte zur Ein - und/ oder Auslagerung fertig oder teilweise kommissionierter Ausgangseinheiten übergeben werden können, sodass auch Ausgangseinheiten in das KTL eingelagert werden können, um so bei einer parallelen Kommissionierung von mehreren Ausgangseinheiten für einen Auftrag die entsprechenden Ausgangseinheiten im Kleinteilelager zwischenzulagern bzw. zu puffern und erst nach vollständiger Fertigstellung des Auftrags sämtliche Ausgangseinheiten mit den kommissionierten Waren aus dem KTL wieder auszulagern und in einer Versandeinheit zusammenzustellen. Dieser Vorgang, der auch Auftragskonsolidierung genannt wird, kann somit ebenfalls in dem gleichen KTL integriert werden, welches für ESS und ZSS verwendet wird. Dadurch wird eine weitere Kompaktierung der Anlage erreicht.

Darüber hinaus ermöglicht eine Förderbahn für die Ausgangseinheiten, welche verschiedene Handhabungsstellen für Ausgangseinheiten in der Anlage verbindet, insbesondere verschiedene Förderstränge entlang verschiedener Regale des KTL und somit verschiedener Pick - Bahnhöfe in verschiedenen Regalgassen, dass eine Ausgangseinheit in einfacher Weise an unterschiedlichen Kommissionierarbeitsplätzen, nämlich verschiedenen Kommissionierbereichen und/ oder verschiedenen Kommissionierplätzen bereitgestellt werden kann.

Vorteilhaft ist bei einem entsprechenden Fördersystem für Ausgangseinheiten auch, dass die beiden unterschiedlichen Kommissioniersysteme, nämlich ZSS und ESS, miteinander kombiniert werden können, sodass Ausgangseinheiten zunächst im ESS an einem ortsfesten Kommissionierplatz bereitgestellt werden können, um anschließend in Pick - Bahnhöfen zur Kommissionierung im ZSS bereitgestellt zu werden und umgekehrt. Da das gesamte System durch eine automatisierte Steuerung mit einer Datenverarbeitungsanlange gesteuert wird, können flexibel die verschiedenen Arten des Kommissionierens miteinander kombiniert werden und abhängig von dem Kommissionieraufwand bzw. Kommissioniererfordernis der unterschiedlichen Waren in den unterschiedlichen Kommissioniersystemen zur Verfügung gestellt werden, wobei sämtliche Waren aus einem einzigen KTL bereitgestellt werden können. Insbesondere können Waren mit unterschiedlicher Kommissionierhäufigkeit, so genannte Schnellläufer, die oft kommissioniert werden, und Langsamläufer, die seltener kommissioniert werden, in der jeweils geeigneten Form kommissioniert werden, um eine effiziente Kommissionierung mit hoher Kommissionierleistung zu ermöglichen.

Entsprechend können in Abhängigkeit von der Kommissionierlast Kommissionieraufgaben zwischen den Kommissionierbereichen und Kommissionierplätzen und / oder zwischen mehreren Kommissionierbereichen oder Kommissionierplätzen verteilt werden. Die Verteilung der Kommissionieraufgaben zwischen den Kommissionierbereichen des ZSS - Subsystems und den Kommissionierplätzen des ESS - Subsystems sowie innerhalb der Kommissionierbereiche des ZSS - Subsystems oder zwischen den Kommissionierplätzen des ZSS - Subsystems kann insbesondere durch die Steuerungseinrichtung der Anlage automatisiert erfolgen, wobei vorzugsweise Parameter aus der Gruppe herangezogen werden, die eine tatsächliche und/ oder zu erwartende durchschnittliche Kommissioniergeschwindigkeit pro Auftrag, die Häufigkeit von erforderlichen Bewegungen von Lagereinheiten und / oder Ausgangseinheiten, die Kommissionierhäufigkeit einer bestimmten Ware, die ermittelte Kommissionierleistung von Kommisssionierern und die Anzahl der erforderlichen Kommissionierer umfasst. Hierbei kann eine Simulation der zukünftigen Kommissionierung auf Basis der bisher erzielten Kommissionierleistungen für unterschiedliche Verteilungen der Kommissionieraufgaben zwischen den ESS - und ZSS - Subsystemen und / oder für verschiedene Kommissionierbereiche oder Kommissionierplätze und den dort beschäftigten Kommissionierern durchgeführt werden und durch Vergleich der ver-
schiedenen zu erwartenden Kommissionierleistungen oder des zu erwartenden Kommissionieraufwands hinsichtlich beispielsweise der erforderlichen Bewegungen von Lagereinheiten und Ausgangseinheiten optimiert werden.

Darüber hinaus ermöglicht die Nutzung des KTL für die Zwischenlagerung von teilweise oder fertig kommissionierten Ausgangseinheiten eine einfache Auftragskonsolidierung und optimale Ausnutzung des Gesamtsystems bei sehr kompakter Bauweise. Bei der Auftragskonsolidierung, bei der das KTL teilweise als so genannter Order Consolidation Butter (OCB) verwendet wird, können mehrere Ausgangseinheiten, die zu einem Auftrag gehören, zwischengelagert bzw. gepuffert werden, bis der gesamte Auftrag bzw. alle Ausgangseinheiten des Auftrags zur Auslieferung fertig sind.

Ferner ist es auch möglich mit der vorgestellten Anlage einen umgekehrten Prozess durchzuführen und Rückläufer, also Waren, die beispielsweise vom Kunden zurückkommen, wieder in den Lagerbestand einzusortieren. Für einen derartigen Retourenprozess können an einem oder mehreren Bereitstellungsplätzen und / oder einem oder mehreren Kommissionierplätzen die Lagereinheiten so zugeführt werden, dass bereitgestellte Rückläufer wieder in die Lagereinheiten überführt werden können.

Mit der Anlage und dem Verfahren der Erfindung ergeben sich somit insbesondere folgende Vorteile:
- Integration von zwei Kommissionierprinzipien ZSS und ESS sowie Auftragskonsolidierungspuffer in einem System. Mit ZSS lassen sich insbesondere Waren mit einer kleinen Anzahl unterschiedlicher Typen von Waren kommissionieren, die vorzugsweise eine hohe Kommissionierhäufigkeit aufweisen und auch als Schnellläufer bezeichnet werden können. Mit ESS können Waren, die eine hohe Anzahl verschiedener Typen von Waren aufweisen, effektiv kommissioniert werden, wobei insbesondere Waren mit einer geringen Kommissionierhäufigkeit, sogenannte Langsamläufer, kommissioniert werden können.
- Flexible Kommissionierung der Waren in beiden Subsystemen
   Die zu kommissionierenden Waren können flexibel im ZSS - oder ESS - Subsystem für die Kommissionierung bereitgestellt werden, und zwar insbesondere in Abhängigkeit von der variabel sich ändernden Kommissionierhäufigkeit der entsprechenden Waren an sich oder in Bezug zu den anderen für die Kommissionierung bereitgestellten Waren. Damit kann die Leistungsfähigkeit der Gesamtanlage jederzeit optimiert werden, beipielsweise bei saisonale Schwankungen oder Schwankungen der Nachfrage nach bestimmten Waren im Verlauf einer Woche oder eines Tages.
- Kompakte Bestandshaltung in einem einzigen Behälterlager (KTL)
   Die Waren sind für beide Kommissionierprinzipien, d.h. an unterschiedlichen Kommissionier - Arbeitsplätzen, im Zugriff, wobei ESS einen stationären Pick-Arbeitsplatz mit sequenzierter Zuführung der einzelnen Lagereinheiten besitzt, während ZSS einzelne Pick - Bahnhöfe mit statischer und dynamischer Bereitstellung der Lagereinheiten in den Bereitstellungsplätzen nutzt. Durch die Bereitstellung gemäß ABC-Struktur, also der Kommissionierhäufigkeit, und der Ermöglichung gleichzeitiger Mehrfach - Zugriffe auf gleiche Typen von Waren ist der Kommissionierbereich und damit der sogenannte Pickweg für einen Kommissionierer stark reduziert. Dadurch kann eine vergleichbare Kommissionierleistung wie bei dem Ware zum Mann System ESS erreicht werden.
- System-Redundanz, da keine getrennten Systeme
   Die Regalbediengeräte des KTL können flexibel für die jeweiligen Aufgaben genutzt werden. Zusätzliche Redundanz kann durch zwei oder mehr Regalbediengeräte pro Regalgasse erreicht werden, sodass selbst bei Ausfall eines Regalbediengeräts die entsprechende Regalgasse mit den angrenzenden Regalen und Lagerplätzen genutzt werden kann.
- Da die Lagereinheiten immer bereit stehen, können Wartezeiten für die Kommissionierer vermieden werden.
- Keine Konsolidierung unterschiedlicher Subsysteme notwendig, da eine direkte Verbindung vom ESS - Kommissonierplatz zu den ZSS - Pick - Bahnhöfen bzw. Auftragskonsolidierungspuffer vorhanden ist.
- Bei der Bearbeitung eines Kommissionierauftrags gibt es nicht mehrere Restbehälter von einzelnen Subsystemen, sondern nur einen Restbehälter pro Auftrag aus dem integrierten System, sodass Transportkosten für den fertig kommissionierten Auftrag reduziert werden können.
- Integrierter Auftragskonsolidierungspuffer
   Die Handhabung von fertig kommissionierten Ausgangseinheiten sind ohne Umlagerungen über das Fördertechniknetzwerk möglich. Die Regalbediengeräte sind flexibel für den Nachschub von zu kommissionierenden Waren und zur Auftragskonsolidierung nutzbar.
- Verkürzung der Pickwege für die Kommissionierer, da Langsamläufer dynamisch bereitgestellt werden.
- Flächeneinsparung für die gesamte Anlage, da höhere Dichte des Systems durch ein integriertes System erreichbar.
- Einsparung beim Operating / System Support, da nur ein einziges integriertes System.
- Signifikante Reduzierung der verbindenden Fördertechnik.

Bei der vorliegenden Erfindung werden unter dem Begriff der Fördertechnik sämtliche Vorrichtungen verstanden, die zur Bewegung von Lagereinheiten und / oder Ausgangseinheiten in der Anlage Verwendung finden können. Beispielsweise kann es sich hierbei um Bandförderer, Rollenförderer, Verschiebewägen, insbesondere Querverschiebewägen, Vertikalförderer, Umlaufaufzüge und dergleichen sowie Roboter oder andere Fahrzeuge handeln. Entsprechend ist der Begriff der Fördertechnik im Sinne der Erfindung weit auszulegen.

### KURZBESCHREIBUNG DER FIGUREN

Die beigefügten Zeichnungen zeigen in
- Figur 1: in einer Draufsicht eine Übersichtsdarstellung eines Ausführungsbeispiels eine Anlage,
- Figur 2: eine vergrößerte Detaildarstellung eines Teils der Figur 1,
- Figur 3: ein Ablaufdiagramm des Betriebsverfahrens zum Betrieb der Anlage aus Figur 1
- Figur 4: eine seitliche Detaildarstellung eines Teils einer weiteren Ausführungsform einer Anlage,
- Figur 5: eine detaillierte Schnittdarstellung eines Teils einer weiteren Ausführungsform einer Anlage,
- Figur 6: eine Detaildarstellung eines Teils der Anlage aus Figur 1,
- Figur 7: eine seitliche Detaildarstellung eines Teils eines Kommissionierbereichs einer Anlage und in
- Figur 8: in den Teilbildern a) bis c) eine Draufsicht auf die Anlage aus Figur 1 mit der Darstellung unterschiedlicher Arten der Nutzung der Kommissionierbereiche.

### AUSFÜHRUNGSBEISPIELE

Weitere Vorteile, Kennzeichen und Merkmale der Erfindung ergeben sich aus der nachfolgenden Beschreibung von Ausführungsbeispielen anhand der beigefügten Figuren. Allerdings ist die Erfindung nicht auf diese Ausführungsbeispiele beschränkt.

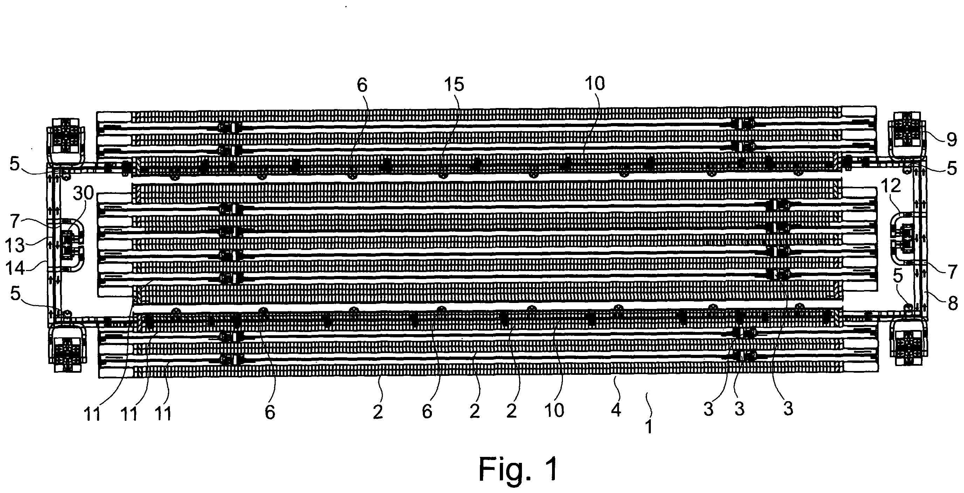

Die Figur 1 zeigt eine Anlage 1 mit einem Kleinteilelager 4 mit einer Vielzahl von Regalen 2, in denen Lagereinheiten und Ausgangseinheiten eingelagert werden können, und Regalbediengeräten 3, die in Regalgassen11 zwischen den Regalen 2 angeordnet sind, um Lagereinheiten und / oder Ausgangseinheiten in die Lagerfächer des KTL 4 ein - und/ oder auszulagern. Die Regale 2 weisen jeweils mindestens zwei Lagerplätze hintereinander in Richtung der Tiefe des Regals 2 und somit quer zur Regalgasse 11 auf, wobei natürlich entlang der Regalgassen 11 eine Vielzahl von Lagerplätzen über - und nebeneinander in jedem Regal 2 angeordnet sind. Die Regalbediengeräte 3 sind so ausgebildet, dass sie nicht nur die beiden in Tiefenrichtung hintereinander angeordneten Lagerplätze eines Regals 2 bedienen können, sondern zumindest teilweise so, dass sie auch die Lagerplätze eines benachbarten Regals bedienen können, sodass Lagereinheiten von einer Regalgasse 11 zu einer benachbarten Regalgasse 11 durch die Lagerfächer der benachbarten Regale 2, die als Transferkanal fungieren, transportiert werden können. Alternativ ist es auch möglich Regale mit nur einem Lagerplatz in Tiefenrichtung oder lediglich ein Regal zwischen zwei Regalgassen mit einer entsprechenden Anzahl von Lagerplätzen in Tiefenrichtung vorzusehen, sodass die allgemeine Funktion, dass Lagerplätze von zwei benachbarten Regalgassen von einem Regalbediengerät bedient werden können, erfüllt wird.

Bei den Regalgassen 11 kann unterschieden werden zwischen Regalgassen 11, in denen Regalbediengeräte 3 zwischen den Regalen 2 entlang fahren, um

Lagereinheiten und / oder Ausgangseinheiten in die Lagerfächer der benachbarten Regale 2 ein - und / oder auszulagern, und solchen Regalgassen 11, in denen keine Regalbediengeräte 3 entlang fahren, sondern Kommissionierbereiche 6 für die ZSS - Kommissionierung vorgesehen sind.

Die Anlage 1 umfasst weiter mehrere ortsfeste Kommissionierplätze 5 für die ESS - Kommissionierung, bei der also Lagereinheiten über Regalbediengeräte 3 aus dem Kleinteilelager 4 ausgelagert und über eine geeignete Lagereinheitenbereitstellungsfördertechnik 9 an den Kommissionierplätzen 5 bereitgestellt werden können, um dort Waren aus den Lagereinheiten in eine Ausgangseinheit zu überführen, die über eine Förderbahn 8 für Ausgangseinheiten angeliefert wird.

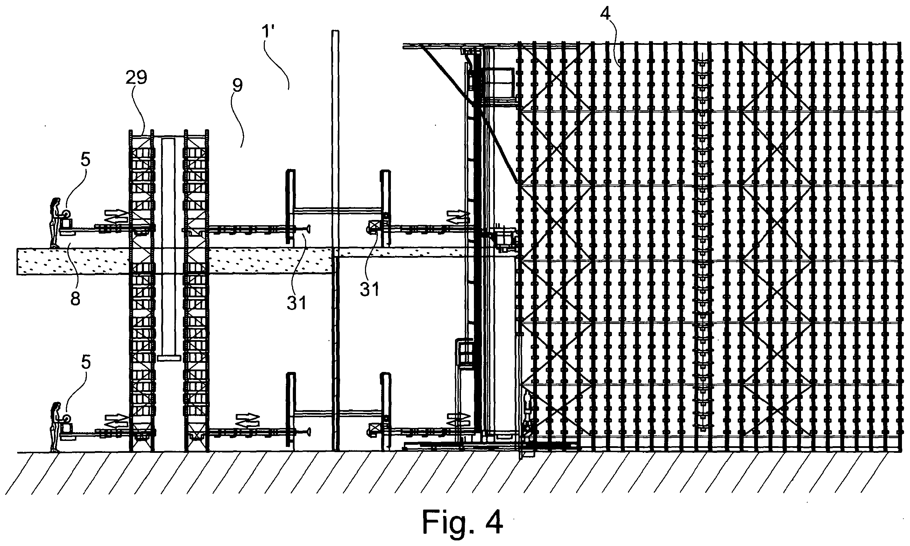

In der Darstellung der Figur 1 sind vier Kommissionierplätze 5 an den Stirnseiten der Regale 2 des KTLs 4 angeordnet. Selbstverständlich ist es bei anderen Ausführungsformen möglich, dass mehr oder weniger Kommissionierplätze 5 vorgesehen sind. Darüber hinaus ist es auch möglich, dass die Kommissionierplätze 5 in verschiedenen Ebenen der Anlage angeordnet sind, wie dies beispielsweise bei der Ausführungsform der Figur 4 zu sehen ist. Ferner ist es auch möglich, dass die Kommissionierplätze 5 in anderen Bereichen in und um das KTL 4 angeordnet werden, wobei jedoch die Anordnung an den Stirnseiten der Regale 2 bevorzugt ist, da dadurch die Lagereinheitenbereitstellungsfördertechnik 9 sehr kompakt ausgeführt werden kann und die Anordnung der Kommissionierbereiche 6 für die ZSS - Kommissionierung vereinfacht wird.

Die Förderbahn 8 zur Anlieferung von Ausgangseinheiten, in die kommissioniert werden soll, weist entlang der Stirnseiten der Regale 2 des KTL 4 zwei parallele Transportbahnen 13,14 auf, sodass Ausgangseinheiten über die Transportbahnen 13,14 direkt zwischen den benachbarten Kommissionierplätzen 5 an einer Stirnseite des KTLs 4 ausgetauscht werden können. In der Figur 1 sind die parallelen Transportbahnen 13 und 14 nebeneinander dargestellt, aber die parallelen Transportbahnen 13 und 14 können auch übereinander angeordnet sein und über Vertikalförderer miteinander verbunden sein.

Darüber hinaus ist an der Transportbahn 13 der Förderbahn 8 eine Ein - und / oder Auslagerungsstelle 7 für Ausgangseinheiten vorgesehen, an der Ausgangseinheiten zur Zwischenlagerung bzw. Pufferung in das KTL 4 eingelagert werden können.

Entsprechend weist die Ein - und / oder Auslagerungsstelle 7 Übergabeplätze für die Ausgangseinheiten an die Regalbediengeräte 3 in den zugeordneten Regalgassen 11 auf. Die Übergabeplätze für die Regalbediengeräte 3 können bei der Ein - und / oder Auslagerungsstelle 7 in der gleichen Ebene, wie die Transportbahn 13 der Förderbahn 8 angeordnet sein, oder in einer oder mehreren Ebenen darüber oder darunter. Für den Transport der Ausgangseinheiten von der Transportbahn13 an die Übergabeplätze der Ein - und / oder Auslagerungsstelle 7 weist diese eine entsprechende Zwischenlagerfördertechnik 12 auf.

Die Förderbahn 8 weist darüber hinaus mehrere Regalbahnen 10 auf, die sich entlang bestimmter Regalgassen 11 im unteren Bereich der dort angeordneten Regale 2 von einer Stirnseite zur anderen Stirnseite der Regale 2 bzw. des KTLs 4 erstrecken. Jeweils zwei benachbarte Regalbahnen 10 weisen entgegengesetzte Förderrichtungen auf und bilden mit den jeweiligen Transportbahnen 13 entlang der Stirnseiten der Regale 2 jeweils einen Transportkreis 15, wobei in der in Figur 1 dargestellten Anlage 1 nur ein Transportkreise 15 zu sehen ist. Selbstverständlich ist es jedoch auch möglich, dass mehr Transportkreise 15 ausgebildet sind, wobei die Transportkreise 15 auch übereinander in verschiedenen Ebenen angeordnet sein können.

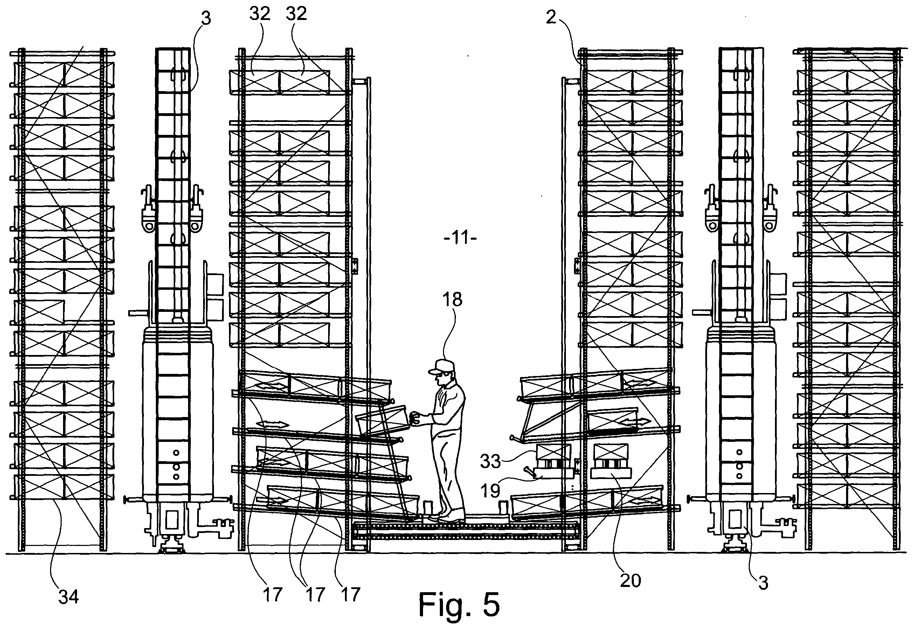

Entlang der Regalbahnen 10 weist die Anlage 1 in den entsprechenden Regalgassen 11 sogenannte Pick - Bahnhöfe 6 bzw. Kommissionierbereiche auf, die eine Vielzahl von Bereitstellungsplätzen 17 für Lagereinheiten umfassen (siehe Fig. 5), aus denen die Kommissionierer 18 die zu kommissionierenden Waren entnehmen und in Ausgangseinheiten, die an die Pick - Bahnhöfe 6 angeliefert werden, gemäß der ZSS - Kommissionierung einsortieren können. Wie nachfolgend mit Bezug auf Figur 5 noch ausführlich beschrieben wird, sind an den Pick - Bahnhöfen 6 dynamische und statische Bereitstellungsplätze 17 für Lagereinheiten vorgesehen, was bedeutet, dass an statischen Bereitstellungsplätzen 17 häufig erforderliche Waren ständig (statisch) bereitgestellt werden, während an dynamischen Bereitstellungsplätzen 17 lediglich Waren bereitgestellt werden, die bei Bedarf erforderlich sind, sodass dort durch die Regalbediengeräte 3 die Lagereinheiten in den Bereitstellungsplätzen häufig gewechselt werden (dynamisch) und verschiedene Waren nach Bedarf bereitgestellt werden können. Die dynamischen und statischen Bereitstellungsplätze 17 können an einem einzelnen bzw. jedem Kommissionierbereich bzw. Pick - Bahnhof 6 vorgesehen sein. Allerdings ist es auch möglich Pick-Bahnhöfe 6 vorzusehen, an denen lediglich dynamische Bereitstellungsplätze 17 angeordnet sind bzw. lediglich statische Bereitstellungsplätze 17.

Wie sich aus der Figur 1 ergibt sind die verschiedenen Pick - Bahnhöfe 6 entlang eines Regals 2 an einer Regalgasse über jeweils eine Regalbahn 10 miteinander verbunden, sodass eine Ausgangseinheit von einem Pick - Bahnhof 6 zum anderen transportiert werden kann. An den Stirnseiten der Regale sind die entsprechenden Regalbahnen 10 für die Ausgangseinheiten entlang der Regale über die Transportbahnen 13 und 14 innerhalb eines Transportkreises 15 bzw. zwischen mehreren Transportkreisen 15 quer miteinander verbunden, sodass eine Ausgangseinheit zu jedem Pick - Bahnhof 6 transportiert werden kann. Zugleich ermöglicht die Förderbahn 8 mit ihren verschiedenen Teilkomponenten der Fördertechnik, dass auch die Kommissionierplätze 5 für die ESS - Kommissionierung eingebunden sind, sodass eine Ausgangseinheit sowohl in den Kommissionierbereichen 6 als auch den Kommissionierplätzen 5 kommissioniert werden kann und /oder über die Zwischenlagertechnik 12 und die Ein - und / oder Auslagerungsstellen 7 in das KTL 4 ein - und / oder ausgelagert werden kann, sodass beispielsweise teilweise oder vollständig fertig kommissionierte Ausgangseinheiten zwischengelagert werden können, um eine Auftragskonsolidierung innerhalb des KTLs 4 durchzuführen.

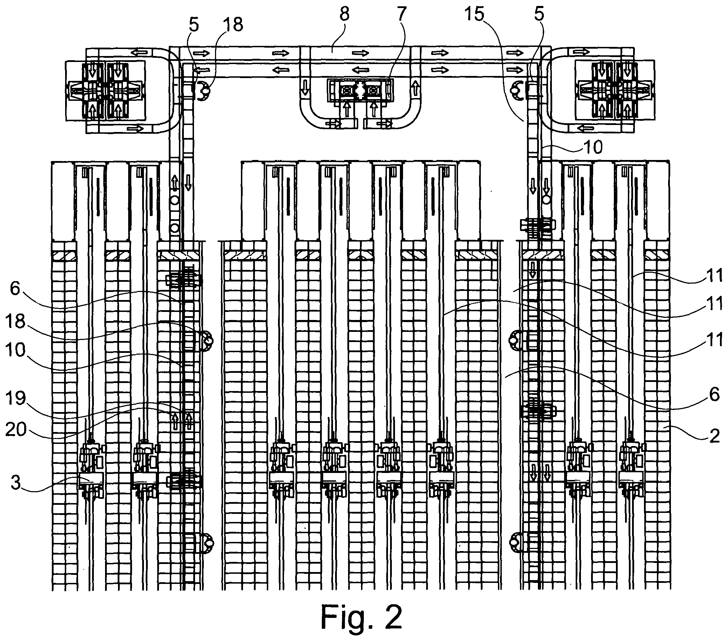

Die Figur 2 zeigt einen Teil der Anlage 1 aus Figur 1 im größeren Detail. Hier ist insbesondere zu erkennen, dass die Regalbahnen 10 jeweils aus zwei parallelen Teilbahnen 19 und 20 aufgebaut sind, die parallel zueinander im unteren Bereich eines Regals 2 verlaufen. Die Teilbahn 19 dient zur Bewegung der in dem jeweiligen Kommissionierbereich 6 zu kommissionierenden Ausgangseinheit, während die Teilbahn 20 für den Transport der Ausgangseinheiten von einem Kommissionierbereich 6 zum anderen bzw. zum Abtransport der Ausgangseinheiten entlang der Förderbahn 8 dient. Die Förderbahn 8 bildet somit insbesondere mit den Teilbahnen 19 und 20 eine umlaufende Kreisbahn, sodass die verschiedenen Bereiche der Anlage miteinander über die Kreisbahn verbunden sind.

Die Ausgangseinheiten können auf der Teilbahn 20 genauso wie auf der Teilbahn 19 automatisiert bewegt werden, beispielsweise durch einen angetriebenen Rollenförderer, oder die Ausgangseinheiten können auf der Teilbahn 19 von einem Kommissionierer 18 entlang der Bereitstellungsplätze 17 manuell bewegt werden.

Darüber hinaus zeigt die Figur 2 die gleichen Komponenten wie die Figur 1, sodass auf eine nochmalige Erläuterung der entsprechenden Bauteile verzichtet werden kann.

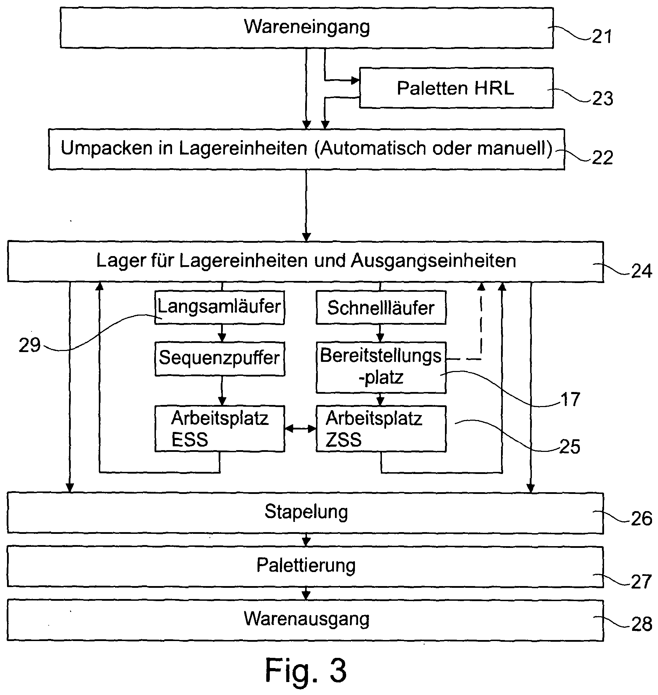

Die Figur 3 zeigt in einem Ablaufdiagramm die verschiedenen Schritte bei der Kommissionierung von Waren entsprechend des Betriebsablaufs der Anlage 1 der Figuren 1 und 2.

Zunächst werden in einem Schritt 21 Waren angeliefert, die im Schritt 22 an nicht näher dargestellten Umpackplätzen in entsprechende Lagereinheiten automatisiert oder manuell umgepackt werden, sofern die Behälter, mit denen die Waren angeliefert werden, nicht direkt als Lagereinheit Verwendung finden können. Statt des direkten Umpackens der angelieferten Waren in Lagereinheiten können die angelieferten Warenstapel auch in einem Palettenlager zwischengelagert werden. Nach dem Umpacken im Schritt 22 werden im Schritt 24 die nunmehr in den Lagereinheiten befindlichen Waren in das automatisierte Kleinteilelager 4 (KTL) bzw. in die Regale 2 davon eingelagert, wozu entsprechenden Regalbediengeräte 3 und eine Einlagerungsfördertechnik Verwendung finden, die beispielsweise zumindest teilweise durch die Förderbahn 8 verwirklicht sein kann und / oder durch eine separate Fördertechnik, die in den Figuren nicht explizit dargestellt ist.

Zur Kommissionierung werden im Schritt 25 die Lagereinheiten mit den darin aufgenommenen Waren aus dem KTL 4 ausgelagert und über die Regalbediengeräte 3 entweder in die Bereitstellungsplätze 17 der Kommissionierbereiche 6 oder über die Lagereinheitenbereitstellungsfördertechnik 9 zu den Kommissionierplätzen 5 befördert. In der Lagereinheitenbereitstellungsfördertechnik 9 kann, wie später noch gezeigt werden wird, ein Sequenzpuffer 29 vorgesehen sein, der sicherstellt, dass die benötigten Lagereinheiten mit den entsprechenden Waren rechtzeitig an den Kommissionierplätzen 5 bereitgestellt werden können.

Danach erfolgt im Schritt 25 die Auftragskommissionierung in die entsprechenden Ausgangseinheiten und zwar entweder in den Kommissionierbereichen 6 und / oder den Kommissionierplätzen 5, wobei sogenannte Langsamläufer, also Waren, die nicht häufig kommissioniert werden müssen, über das ESS - System kommissioniert werden können, während sogenannte Schnellläufer, die häufig kommissioniert werden, mit dem ZSS - System kommissioniert werden können. Allerdings ist, wie bereits oben erwähnt, ein flexibler Einsatz der Kommissioniersysteme möglich.

Teilweise kommissionierte Ausgangseinheiten oder bereits fertig kommissionierte Ausgangseinheiten können zur Zwischenlagerung bzw. Auftragskonsolidierung in das KTL 4 eingelagert werden, bis eine weitere Kommissionierung in den entsprechenden Kommissionierbereichen 6 und / oder Kommissionierplätzen 5 möglich ist bzw. die anderen Ausgangseinheiten einer Versandeinheit fertig kommissioniert sind, sodass sämtliche Ausgangseinheiten einer Versandeinheit zu einer Stapel - und/ oder Packstation überführt werden können, wo sie gestapelt 26 und/ oder verpackt 27 werden können. Der eigentliche Vorgang des Warenausgangs erfolgt im Schritt 28.Die Figuren 4 bis 9 zeigen Details der Anlage 1 und weitere Ausführungsbeispiele verschiedener Komponenten der miteinander kombinierten Kommissioniersysteme ESS und ZSS.

In der Figur 4 ist beispielsweise gezeigt, wie das Zusammenwirken zwischen einem ESS-Kommissionierplatz 5 und dem automatisierten Kleinteilelager 4 über Lagereinheitenbereitstellungsfördertechnik 9 und eine Puffereinrichtung 29 (Sequenzpuffer) ausgestaltet werden kann.

Figur 4 zeigt in einer seitlichen Schnittansicht einen Teil einer Ausführungsform einer Anlage 1' mit einem KTL 4 und zwei Kommissionierplätzen 5 für die ESS - Kommissionierung in zwei unterschiedlichen Ebenen der Anlage 1'. Die Kommissionierplätze 5 sind über die Lagereinheitenbereitstellungfördertechnik 9 mit dem KTL 4 verbunden, sodass Lagereinheiten aus dem KTL 4 zu den Kommissionierplätzen 5 transportiert werden können.

Die Lagereinheitenbereitstellungsfördertechnik 9 umfasst einen Sequenzpuffer 29 in Form eines vertikalen Umlaufaufzugs, in dem die Lagereinheiten vorgehalten werden können, sodass eine rechtzeitige Anlieferung entsprechend der vorgegebenen Sequenz für die Kommissionierung an den Kommissionierplätzen 5 sichergestellt werden kann. Durch die Ausbildung als vertikaler Umlaufaufzug kann der Sequenzpuffer 29 gleichzeitiger Sequenzpuffer für die beiden Kommissionierplätze 5 in den verschiedenen Ebenen dienen.

Darüber hinaus umfasst die Lagereinheitenbereitstellungsfördertechnik 9 ein Regalbediengerät 30, um Lagereinheiten in vertikaler Richtung aus verschiedenen Ebenen des KTLs 4 in Richtung der ESS - Kommissionierplätze 5 transportieren zu können. Darüber hinaus sind in der Lagereinheitenbereitstellungsfördertechnik 9 Querförderer 31 vorgesehen, die senkrecht zur Bildebene einen Transport der Lagereinheiten zwischen den einzelnen Regalgassen ermöglichen. Damit ist es möglich von jedem Lager - bzw. Regalfach des KTLs 4 jede Lagereinheit zu jedem beliebigen Kommissionierplatz 5 oder Kommissionierbereich 6 zu transportieren.

Die Figur 5 zeigt einen Schnitt durch einen Kommissionierbereich 6 bzw. Pick - Bahnhof mit der Bereitstellung der Lagereinheiten 32 in Bereitstellungsplätzen 17 im unteren Bereich zweier eine Regalgasse 11 einschließenden Regale 2. Die Bereitstellung der Lagereinheiten 32 mit den zu kommissionierenden Waren in den Bereitstellungsplätzen 17 für die ZSS - Kommissionierung kann sowohl in statischen Bereitstellungsplätzen als auch in dynamischen Bereitstellungsplätzen 17 erfolgen. Bei statischen Bereitstellungsplätzen 17 werden in den entsprechenden Bereitstellungsplätze 17 ständig, also über den gesamten Kommissioniervorgang, immer die gleichen Waren bereitgehalten, sodass das jeweilige Regalbediengerät 3 immer die Lagereinheiten mit den gleichen Waren von der Rückseite des entsprechenden Regals 2, die der Entnahmeseite gegenüberliegt, in den Bereitstellungsplatz 17 nachschiebt. Bei dynamischen Bereitstellungsplätzen 17 wechselt die Art der Ware, die in den Lagereinheiten in dem entsprechenden Bereitstellungsplatz bereitgehalten wird, sodass das Regalbediengerät 3 je nach Bedarf die entsprechend unterschiedlichen Typen von Waren in den gleichen Bereitstellungsplatz 17 nachliefert und, wenn die Lagereinheit mit den darin verbliebenen Waren nicht mehr benötigt wird, diesen wiederum in ein Regalfach 34 des KTLs 4 zurückbringt.

Die Figur 5 zeigt auch, dass die Ausgangseinheiten 33 auf den Teilbahnen 19 und 20 der Regalbahn 10 der Förderbahn 8 entlang der Regale 2 transportiert werden, wobei der Kommissionierer 18 aus den in den Bereitstellungsplätzen 17 bereitgestellten Lagereinheiten 32 die entsprechenden Waren in die auf der Teilbahn 19 transportierte Ausgangseinheit überführt, während die auf der Teilbahn 20 transportierte Ausgangseinheit 33 an dem gezeigten Pick - Bahnhof 6 vorbeigeführt wird.

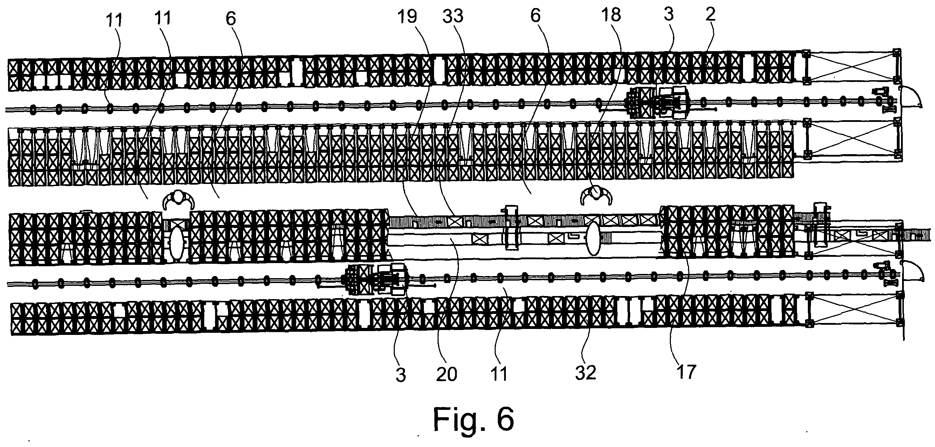

Die Figur 6 zeigt einen Horizontalschnitt und eine Draufsicht auf Kommissionierbereiche 6 einer Anlage, von denen einer im Querschnit in Figur 5
dargestellt ist. Wie bereits in der Figur 5 zu sehen ist, sind in einem unteren Bereich der Regale 2 entlang der Regalgasse 11, entlang der die Teilbahnen 19 und 20 der Regalbahn 10 verlaufen, Bereitstellungsplätze 17 vorgesehen, die über die in benachbarten Regalgassen 11 verfahrbar angeordneten Regalbediengeräte 3 mit Lagereinheiten aus den Regalfächern 34 des KTLs 4 mit Waren versorgt werden. In den Kommissionierbereichen 6 sorgen Kommissionierer 18 dafür, dass die Waren aus den Lagereinheiten 32 in den Bereitstellungsplätzen 17 in die Ausgangseinheiten 33 überführt werden.

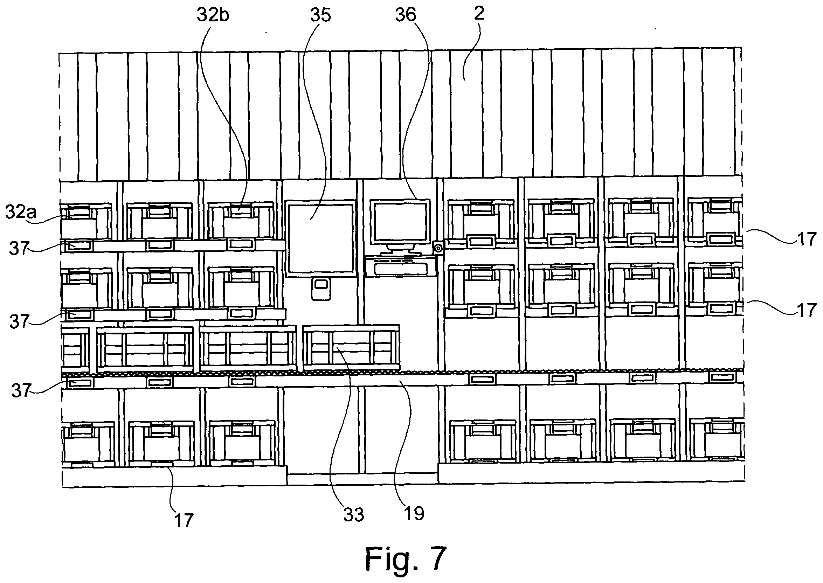

Hierzu sind in den Kommissionierbereichen 6 mehrere Hilfsmittel, wie ein Display 35 und / oder die Anzeige 36 einer Workstation angeordnet, die dem Kommissionierer 18 anzeigen, wie viele Waren er aus welcher Lagereinheit in welche Ausgangseinheit überführen soll (siehe Fig. 7). Dazu können auch an den Bereitstellungsplätzen 17 entsprechende Farblichtbalken 37 angeordnet sein, die die entsprechenden Bereitstellungsplätze 17 farblich kennzeichnen, aus welchen für die nächste Ausgangseinheit 33 entsprechende Waren entnommen werden müssen. Beispielsweise kann für die nächste Ausgangseinheit 33 am Display 35 die Stückzahl angezeigt werden, die aus der Lagereinheit 32a, dessen Bereitstellungsplatz 17 mit der Lichtbalkenanzeige auf Grün geschaltet ist, entnommen werden soll. Die Kennzeichnung mit der Farbe Grün erleichtert dem Kommissionierer den betreffenden Bereitstellungsplatz 17 mit der dort bereit gehaltenen Lagereinheit 32a zu finden, aus dem Ware entnommen werden muss. Entsprechend kann für eine spätere Ausgangseinheit oder die nächste zu kommissionierende Ware eine andere Farbe gewählt werden, z.B. die Farbe Rot, die anzeigt, dass für die nächste Ausgangseinheit oder für die nächste zu kommissionierende Ware die Ware aus der Lagereinheit 32b in dem entsprechenden Bereitstellungsplatz 17 entnommen werden muss, die durch den Lichtbalkenanzeige mit rot gekennzeichnet sind. Alternativ können auch mehrere Bereitstellungsplätze 17 gleichzeitig mit einer Farbe markiert werden, um dem Kommissionierer anzuzeigen, dass aus diesen Bereitstellungsplätzen 17 Waren in die Ausgangseinheit 33 überführt werden müssen. Somit kann die Lichtbalkenanzeige 37 unterschiedlich eingesetzt werden, um entweder konkret einen Bereitstellungsplatz 17 für einen Kommissioniervorgang anzuzeigen oder mehrere Bereitstellungsplätze 17 zu kennzeichnen, aus denen verschiedene Waren für eine Ausgangseinheit 33 entnommen werden müssen.

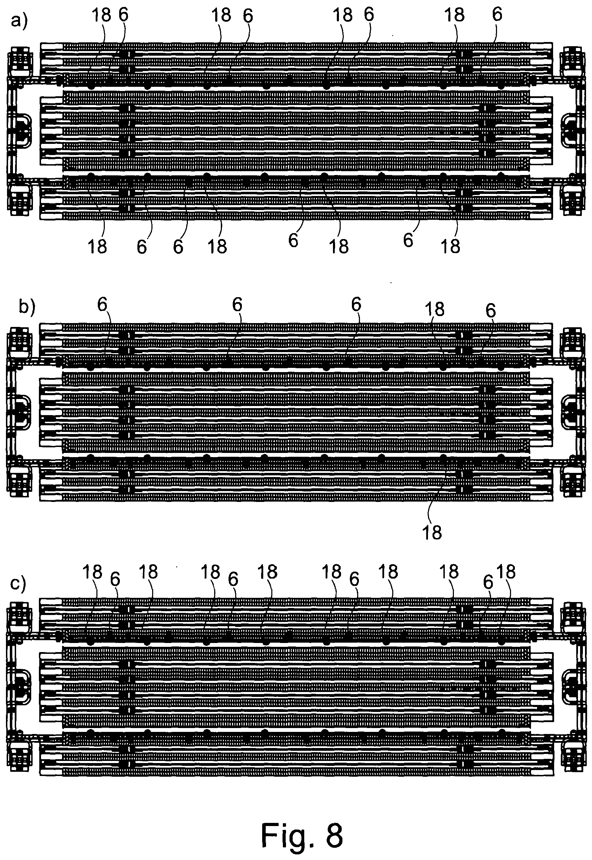

Die Figur 8 zeigt, dass die Kommissionierbereiche 6 bzw. Pick-Bahnhöfe variabel genutzt werden können. In den Teilbildern a), b) und c) der Figur 8 sind die Kommissionierbereiche 6 der Anlage 1 aus den Figuren 1 und 2 mit unterschiedlicher Nutzung der verschiedenen Kommissionierbereich 6 durch eine unterschiedliche Anzahl von Kommissionieren 18 dargestellt. Im Teilbild a) ist jedem Kommissionierbereich 6 ein Kommissionierer 18 zugeordnet, während im Teilbild b) ein Kommissionierer 18 mehrere Kommissionierbereiche 6 betreut und im Teilbild c) mehrere Kommissionierer 18 in einem Kommissionierbereich 6 tätig sind. Dies verdeutlicht, dass die Kommissionierbereiche 6 bzw. Pick-Bahnhöfe variabel mit einer unterschiedlichen Anzahl von Kommissionieren 18 genutzt werden können.

Mit der erfindungsgemäßen Anlage und dem Verfahren zur Kommissionierung von Waren, bei dem zwei unterschiedliche Kommissionierarten in kompakter Weise mit einem automatisierten Kleinteilelager verwirklicht werden, kann flexibel auf unterschiedliche Kommissionieranforderungen eingegangen werden. Insbesondere können flexibel verschiedene Waren, die häufig kommissioniert werden und sogenannte Schnellläufer darstellen, mit dem sogenannten ZSS-Kommissioniersystem kommissioniert werden und eine Vielzahl von Waren, die weniger häufig kommissioniert werden müssen, mit dem sogenannten ESS-System kommissioniert werden, wobei die einzelnen Waren flexibel von einem System zum anderen verschoben werden können.

### Bezugszeichenliste

- 1: Anlage
- 2: Regal
- 3: Regalbediengerät
- 4: Kleinteilelager (KTL)
- 5: Kommissionierplatz (ESS)
- 6: Kommissionierbereich (Pick - Bahnhof) (ZSS)
- 7: Ein - / Auslagerungsstelle
- 8: Förderbahn
- 9: Lagereinheitenbereitstellungsfördertechnik
- 10: Regalbahn
- 11: Regalgasse
- 12: Zwischenlagerfördertechnik
- 13: Transportbahn
- 14: Transportbahn
- 15: Transportkreis
- 17: Bereitstellungsplatz
- 18: Kommissionierer
- 19: Teilbahn
- 20: Teilbahn
- 21: Wareneingang
- 22: Umpacken
- 23: Zwischenlagern im Palettenlager
- 24: Einlagern in KTL
- 25: Kommissionierung
- 26: Stapeln
- 27: Packen der Ausgangseinheiten
- 28: Warenausgang
- 29: Sequenzpuffer
- 30: Regalbediengerät
- 31: Querförderer
- 32: Lagereinheit
- 32a: Lagereinheit
- 32b: Lagereinheit
- 33: Ausgangseinheit
- 34: Regalfach
- 35: Display
- 36: Anzeige
- 37: Farblichtbalken

## Patentansprüche

1. Anlage zur Kommissionierung von Waren aus Lagereinheiten (32) in eine oder mehrere Ausgangseinheiten (33) zur Zusammenstellung einer Versandeinheit, wobei die Anlage ein Kleinteilelager (4), in dem die Lagereinheiten gelagert sind, und mindestens einen innerhalb des Kleinteilelagers liegenden Kommissionierbereich (6) aufweist, in dem Lagereinheiten aus dem Kleinteilelager zur Entnahme von Waren aus den Lagereinheiten an mehreren Bereitstellungsplätzen (17) bereitgestellt werden, wobei eine Förderbahn (8) dem Kommissionierbereich zugeordnet ist, über die Ausgangseinheiten im und / oder aus dem Kommissionierbereich bewegt werden können, sodass Waren an verschiedenen Orten innerhalb des Kommissionierbereichs (6) aus den in den Bereitstellungsplätzen angeordneten Lagereinheiten in die Ausgangseinheiten kommissioniert werden können,
wobei die Anlage weiterhin mindestens einen außerhalb des Kleinteilelagers liegenden Kommissionierplatz (5) aufweist, an dem ein oder mehrere Aufnahmeplätze für Ausgangseinheiten sowie eine Fördereinrichtung für Lagereinheiten aus dem Kleinteilelager (4) angeordnet sind, sodass aus den auf der Fördereinrichtung angelieferten Lagereinheiten Waren ortsfest in die an den Aufnahmeplätzen angeordneten Ausgangseinheiten kommissioniert werden können,
**dadurch gekennzeichnet, dass**
das Kleinteilelager (4) eine Ein - und / oder Auslagerungsstelle (7) mit einer Zwischenlagerfördertechnik (12) zur Ein - und / oder Auslagerung von teilweise oder fertig kommissionierten Ausgangseinheiten in das Kleinteilelager aufweist, die mit der Förderbahn (8) verbunden ist, sodass Ausgangseinheiten von dem Kommissionierbereich und / oder Kommissionierplatz in das Kleinteilelager eingelagert oder umgekehrt ausgelagert werden können, und
der mindestens eine Kommissionierplatz (5) über eine Lagereinheitenbereitstellungsfördertechnik (9) mit dem Kleinteilelager verbunden ist, wobei insbesondere zwischen Kleinteilelager und Kommissionierplatz ein Sequenzpuffer (29) zur sequenzierten Bereitstellung von Lagereinheiten angeordnet ist, und wobei der Sequenzpuffer (29) als vertikaler Umlaufaufzug ausgebildet ist.

2. Anlage nach Anspruch 1,
**dadurch gekennzeichnet, dass**
über die Förderbahn (8) Kommissionierbereich (6) und Kommissionierplatz (5) verbunden sind, sodass Ausgangseinheiten automatisiert von dem mindestens einen Kommissionierbereich an einen Kommissionierplatz und / oder umgekehrt transportiert werden können.

3. Anlage nach einem der vorhergehenden Ansprüche,
**dadurch gekennzeichnet, dass**
die Anlage Vertikalfördertechnik (30) umfasst, um Komponenten aus der Gruppe, die Kommissionierbereiche (6), Kommissionierplätze (5) und Zwischenlagerfördertechnik (12) umfasst, auf unterschiedlichen Ebenen miteinander zu verbinden.

4. Anlage nach einem der vorhergehenden Ansprüche,
**dadurch gekennzeichnet, dass**
die Anlage eine Einlagerfördertechnik aufweist, mit der Lagereinheiten in das Kleinteilelager (4) eingelagert werden können, wobei die Einlagerfördertechnik insbesondere gemeinsame Komponenten mit der Zwischenlagerfördertechnik (12) aufweist, und / oder dass die Anlage eine Ausgabefördertechnik aufweist, mit der Ausgangseinheiten zu einer Stapel - und / oder Packstation transportiert werden können, wobei die Ausgabefördertechnik insbesondere mit der Förderbahn (8) und / oder mindestens der Ein - und / oder Auslagerungsstelle (7) des Kleinteilelagers in Verbindung steht.

5. Anlage nach einem der vorhergehenden Ansprüche,
**dadurch gekennzeichnet, dass**
das Kleinteilelager (4) ein Regallager ist, das mehrere Regalreihen mit Regalgassen (11) aufweist, die jeweils entlang einer Regalreihe angeordnet sind, wobei in mindestens einer Regalgasse mindestens ein, vorzugsweise mindestens zwei Regalbediengeräte je Regalgasse zum Ein - und / oder Auslagern von Lagereinheiten und Ausgangseinheiten angeordnet sind.

6. Anlage nach Anspruch 5,
**dadurch gekennzeichnet, dass**
das Kleinteilelager (4) Transferkanäle zur Übergabe von Lager - und / oder Ausgangseinheiten von einer Regalgasse zur anderen aufweist und / oder Regalbediengeräte umfasst, die von verschiedenen Regalgassen auf gleiche Lagerplätze zugreifen können.

7. Anlage nach einem der vorhergehenden Ansprüche,
**dadurch gekennzeichnet, dass**
die Bereitstellungsplätze (17) des Kommissionierbereichs (6) in dem Kleinteilelager angeordnet sind, insbesondere in einem Teil eines Regals des Kleinteilelagers und von einem oder mehreren Regalbediengeräten des Kleinteilelagers mit Lagereinheiten bestückt werden.

8. Anlage nach einem der vorhergehenden Ansprüche,
**dadurch gekennzeichnet, dass**
die Bereitstellungsplätze (17) ortsfest sind und die Förderbahn (8) so ausgebildet ist, dass sie Ausgangseinheiten an den Bereitstellungsplätzen vorbei bewegen kann, wobei insbesondere mehrere Kommissionierbereiche (6) entlang der Förderbahn angeordnet sind, sodass insbesondere jede Ausgangseinheit über ein Netzwerk zu jedem Kommissionierbereich gefördert werden kann.

9. Anlage nach einem der Ansprüche 5 bis 8,
**dadurch gekennzeichnet, dass**
der oder die Kommissionierplätze (5) an den Stirnseiten der Regale (2) angeordnet sind.

10. Verfahren zur Kommissionierung von Waren, insbesondere unter Verwendung einer Anlage nach einem der vorhergehenden Ansprüche, bei welchem Waren in einem Kleinteilelager (4) in Lagereinheiten (32) gelagert werden und zur Zusammenstellung einer Versandeinheit in ein oder mehrere Ausgangseinheiten (33) der Versandeinheit überführt werden, wobei die Lagereinheiten zum einen automatisiert aus dem Kleinteilelager in Bereitstellungsplätzen (17) eines innerhalb des Kleinteilelagers liegenden Kommissionierbereichs (6) bereitgestellt werden und wobei aus den in den Bereitstellungsplätzen bereitgestellten Lagereinheiten die Waren an verschiedenen Orten innerhalb des Kommissionierbereichs (6) in den oder die auf einer Förderbahn (8) angeordneten Ausgangseinheiten überführt werden, wobei zum anderen weitere Waren an mindestens einem außerhalb des Kleinteilelagers liegenden Kommissionierplatz (5) von Lagereinheiten aus dem Kleinteilelager in Ausgangseinheiten überführt werden, wobei am Kommissionierplatz die Lagereinheiten auf einer Fördereinrichtung automatisiert zu dem Kommissionierplatz transportiert werden, sodass aus den verschiedenen zu dem Kommissionierplatz transportierten Lagereinheiten Waren ortsfest in eine am Kommissionierplatz bereitgestellte Ausgangseinheit überführt werden,
**dadurch gekennzeichnet, dass**
ein oder mehrere Ausgangseinheiten (33) im Kleinteilelager (4) zwischen einzelnen Kommissionierschritten und / oder bis zur Fertigstellung der gesamten Versandeinheit zwischengelagert werden, und
die Waren am Kommissionierplatz (5) in verschiedenen Lagereinheiten in einer vorbestimmten Sequenz, insbesondere mittels Sequenzpuffer (29) bereitgestellt werden, wobei der Sequenzpuffer als vertikaler Umlaufaufzug ausgebildet ist.

11. Verfahren nach Anspruch 10,
**dadurch gekennzeichnet, dass**
das Kleinteilelager (4) eine Vielzahl von Lagerplätzen (34) aufweist, wobei im Kleinteilelager sowohl Lagereinheiten als auch Ausgangseinheiten gelagert werden und insbesondere eine Vielzahl von Lagerplätzen, vorzugsweise jeder Lagerplatz sowohl für die Lagerung von Lagereinheiten als auch für die Zwischenlagerung von Ausgangseinheiten verwendet werden kann.

12. Verfahren nach einem der Ansprüche 10 oder 11,
**dadurch gekennzeichnet, dass**
der oder die Ausgangseinheiten (33), insbesondere ein und derselbe sowohl am Kommissionierplatz (5) als auch im Kommissionierbereich (6) kommissioniert werden können.

13. Verfahren nach einem der Ansprüche 10 bis 12,
**dadurch gekennzeichnet, dass**
bestimmte Waren immer in einem Bereitstellungsplatz (17), vorzugsweise immer im gleichen Bereitstellungsplatz bereitgestellt werden und / oder andere Waren nur bei Bedarf und vorzugsweise an beliebigen Bereitstellungsplätzen (17) bereitgestellt werden.

14. Verfahren nach einem der Ansprüche 10 bis 13,
**dadurch gekennzeichnet, dass**
eine Lagereinheit mit bestimmten Waren an einem Bereitstellungsplatz (17) und / oder einem Kommissionierplatz (5) bereitgestellt werden kann, sodass zwischen den Kommissionierarten für die bestimmte Ware gewechselt werden kann.

15. Verfahren nach einem der Ansprüche 10 bis 14,
**dadurch gekennzeichnet, dass**
in Abhängigkeit von der Kommissionierlast Kommissionieraufgaben zwischen den Kommissionierbereichen und Kommissionierplätzen und / oder zwischen mehreren Kommissionierbereichen oder Kommissionierplätzen verteilt werden, insbesondere automatisiert verteilt werden, wobei vorzugsweise Parameter aus der Gruppe herangezogen werden, die eine tatsächliche und / oder zu erwartende durchschnittliche Kommissioniergeschwindigkeit pro Auftrag, die Häufigkeit von erforderlichen Bewegungen von Lagereinheiten und / oder Ausgangseinheiten, die Kommissionierhäufigkeit einer bestimmten Ware, die ermittelte Kommissionierleistung von Kommisssionierern und die Anzahl der erforderlichen Kommissionierer umfasst.

## Claims

1. System for picking goods from storage units (32) into one or more output units (33) for assembling a shipping unit, wherein the system comprises a small parts warehouse (4) in which the storage units are stored, and at least a picking area (6) located within the small parts warehouse, in which storage units from the small parts warehouse are made available at several staging locations (17) for the removal of goods from the storage units, wherein a conveyor track (8) is assigned to the picking area, via which output units can be moved into and/or out of the picking area, so that goods can be picked at different locations within the picking area (6) from the storage units arranged in the staging locations into the output units ,
wherein the system further comprises at least one picking station (5) located outside the small parts warehouse, at which one or more receiving locations for output units and a conveyor system for storage units from the small parts warehouse (4) are arranged, so that goods can be picked from the storage units delivered on the conveyor system into the output units arranged at the receiving stations in a stationary manner,
**characterized in that**
the small parts warehouse (4) has a storage and/or retrieval point (7) with an intermediate storage conveyor system (12) for storing and/or retrieving partially or fully picked output units into the small parts warehouse, which is connected to the conveyor track (8) so that output units can be stored from the picking area and/or picking station into the small parts warehouse or retrieved from it, and
the at least one picking station (5) is connected to the small parts warehouse via a storage unit supply conveyor system (9), wherein in particular a sequence buffer (29) is arranged between the small parts warehouse and the picking station for the sequenced supply of storage units, and wherein the sequence buffer (29) is designed as a vertical circulating elevator.

2. System according to claim 1,
**characterized in that**
the conveyor track (8) connects the picking area (6) and the picking station (5) so that output units can be automatically transported from the at least one picking area to a picking station and/or vice versa.

3. System according to one of the preceding claims,
**characterized in that**
the system comprises vertical conveyor technology (30) for connecting components from the group comprising picking areas (6), picking stations (5), and intermediate storage conveyor technology (12) to each other at different levels.

4. System according to one of the preceding claims,
**characterized in that**
the system has a storage conveyor system with which storage units can be stored in the small parts warehouse (4), wherein the storage conveyor system in particular has components in common with the intermediate storage conveyor system (12), and/or that the system has an output conveyor system with which output units can be transported to a stacking and/or packing station, wherein the output conveyor system is connected in particular to the conveyor track (8) and/or at least the storage and/or retrieval point (7) of the small parts warehouse.

5. System according to one of the preceding claims,
**characterized in that**
the small parts warehouse (4) is a rack warehouse comprising several rows of racks with rack aisles (11) arranged along each row of racks, wherein at least one, preferably at least two, rack serving devices are arranged in each rack aisle for storing and/or retrieving storage units and output units.

6. System according to claim 5,
**characterized in that**
the small parts warehouse (4) has transfer channels for transferring storage- and/or output units from one shelf aisle to another and/or comprises shelf servicing devices that can access the same storage locations from different shelf aisles.

7. System according to one of the preceding claims,
**characterized in that**
the staging locations (17) of the picking area (6) are arranged in the small parts warehouse, in particular in a part of a rack of the small parts warehouse, and are loaded with storage units by one or more storage and retrieval machines of the small parts warehouse.

8. System according to one of the preceding claims,
**characterized in that**
the staging areas (17) are stationary and the conveyor track (8) is designed so that it can move output units past the staging areas, wherein in particular several picking areas (6) are arranged along the conveyor track so that in particular each output unit can be conveyed via a network to each picking area.

9. System according to any of claims 5 to 8,
**characterized in that**
the picking station(s) (5) are arranged at the front ends of the shelves (2).

10. Method for picking goods, in particular using a system according to one of the preceding claims, in which goods are stored in a small parts warehouse (4) in storage units (32) and are transferred to one or more output units (33) of the shipping unit for the purpose of assembling a shipping unit, whereby the storage units are automatically transferred from the small parts warehouse to staging areas (17) of a picking area located within the small parts warehouse (6) within the small parts warehouse, and whereby the goods are transferred from the storage units provided in the staging areas to the output unit(s) arranged on a conveyor belt (8) at various locations within the picking area (6), whereby, on the other hand, further goods are transferred from storage units from the small parts warehouse to output units at at least one picking station (5) outside the small parts warehouse, whereby the storage units are automatically transported to the picking station on a conveyor system, so that goods from the various storage units transported to the picking station are transferred to an output unit provided at the picking station in a stationary manner,
**characterized in that**
one or more output units (33) are temporarily stored in the small parts warehouse (4) between individual picking steps and/or until the entire shipping unit is completed, and
the goods are provided at the picking station (5) in different storage units in a predetermined sequence, in particular by means of a sequence buffer (29), wherein the sequence buffer is designed as a vertical circulating elevator.

11. Method according to claim 10,
**characterized in that**
the small parts warehouse (4) has a plurality of storage locations (34), wherein both storage units and output units are stored in the small parts warehouse and, in particular, a plurality of storage locations, preferably each storage location, can be used both for the storage of storage units and for the intermediate storage of output units.

12. Method according to one of claims 10 or 11,
**characterized in that**
the output unit or units (33), in particular one and the same, can be picked both at the picking station (5) and in the picking area (6).

13. Method according to one of claims 10 to 12,
**characterized in that**
certain goods are always provided at a staging location (17), preferably always at the same staging location, and/or other goods are only provided when needed and preferably at any staging location (17).

14. Method according to one of claims 10 to 13,
**characterized in that**
a storage unit with certain goods can be provided at a staging area (17) and/or a picking area (5), so that it is possible to switch between the picking types for the specific goods.

15. Method according to one of claims 10 to 14,
**characterized in that**
depending on the picking load, picking tasks are distributed between the picking areas and picking stations and/or between several picking areas or picking stations, in particular are distributed automatically, whereby parameters from the group are preferably used, which comprise an actual and/or expected average picking speed per order, the frequency of required movements of storage units and/or output units, the picking frequency of a specific good, the determined picking performance of pickers, and the number of required pickers.

## Revendications

1. Installation pour la préparation de commandes de marchandises à partir d'unités de stockage (32) dans une ou plusieurs unités de sortie (33) pour la constitution d'une unité d'expédition, l'installation présentant un emplacement (4) de stockage de petites pièces dans lequel sont stockées les unités de stockage, et au moins une zone (6) de préparation de commandes située à l'intérieur de l'emplacement de stockage de petites pièces, les unités de stockage qui proviennent de l'emplacement de stockage de petites pièces étant fournies à plusieurs emplacements de fourniture (17) afin de prélever des marchandises des unités de stockage, une voie de transport (8) étant associée à la zone de préparation de commandes, sur laquelle des unités de sortie sont aptes à être déplacées dans, et/ou hors de, la zone de préparation de commandes, de sorte que des marchandises soient aptes à être prélevées à différents endroits à l'intérieur de la zone (6) de préparation de commandes à partir des unités de stockage agencées dans les emplacements de fourniture situés dans les unités de sortie,
l'installation présentant en outre au moins un emplacement (5) de préparation de commandes situé à l'extérieur de l'emplacement de stockage de petites pièces, un ou plusieurs emplacements de réception pour les unités de sortie, ainsi qu'un dispositif de transport, étant agencés pour les unités de stockage provenant de l'emplacement (4) de stockage de petites pièces, de sorte que les marchandises soient aptes à être prélevées de manière stationnaire à partir des unités de stockage acheminées par le dispositif de transport et placées dans les unités de sortie agencées aux emplacements de réception, **caractérisée en ce que**
l'emplacement (4) de stockage de petites pièces comprend un emplacement (7) de stockage et/ou de prélèvement ayant un moyen de convoyage (12), de stockage intermédiaire, pour le stockage et/ou le prélèvement d'unités de sortie partiellement ou entièrement prélevées dans l'emplacement de stockage de petites pièces, qui est relié à la voie de transport (8), de sorte que les unités de sortie soient aptes à être stockées dans l'emplacement de stockage de petites pièces à partir de la zone de préparation de commandes et/ou du poste de préparation de commandes ou, inversement, à en être déstockées, et
ledit au moins un emplacement (5) de préparation de commandes est relié à l'emplacement de stockage de petites pièces par un moyen (9) de convoyage pour la fourniture d'unités de stockage, un tampon séquentiel (29) étant notamment agencé entre l'emplacement de stockage de petites pièces et l'emplacement de préparation de commandes pour la fourniture séquentielle d'unités de stockage, et le tampon séquentiel (29) étant conçu sous la forme d'un ascenseur circulaire vertical.

2. Installation selon la revendication 1,
**caractérisée en ce que**
la zone (6) de préparation de commandes et l'emplacement (5) de préparation de commandes sont reliés par la voie de transport (8), de sorte que les unités de sortie soient aptes à être transportées automatiquement de ladite au moins une zone de préparation de commandes vers un emplacement de préparation de commandes, et/ou inversement.

3. Installation selon l'une des revendications précédentes,
**caractérisée en ce que**
l'installation comprend un moyen (30) de convoyage vertical pour relier entre eux, à différents niveaux, des composants du groupe comprenant les zones (6) de préparation de commandes, les emplacements (5) de préparation de commandes et le moyen de convoyage (12), de stockage intermédiaire.

4. Installation selon l'une des revendications précédentes,
**caractérisée en ce que**
l'installation comprend un moyen de convoyage et de stockage, permettant de stocker des unités de stockage dans l'emplacement (4) de stockage de petites pièces, le moyen de convoyage et de stockage comprenant en particulier des composants communs avec le moyen de convoyage (12), de stockage intermédiaire, et/ou **en ce que** l'installation comprend un moyen de convoyage de sortie permettant de transporter des unités de sortie vers une station d'empilage et/ou d'emballage, le moyen de convoyage de sortie étant notamment relié à la voie de convoyage (8) et/ou au moins à l'emplacement (7) de stockage et/ou de prélèvement de l'emplacement de stockage de petites pièces.

5. Installation selon l'une des revendications précédentes,
**caractérisée en ce que**
l'emplacement (4) de stockage de petites pièces est un emplacement de stockage à rayonnages qui comprend plusieurs rangées de rayonnages avec des allées de rayonnages (11) qui sont agencées chacune le long d'une rangée de rayonnages, au moins un, de préférence au moins deux, appareils de desserte des rayonnages étant agencés dans au moins une allée de rayonnages par allée de rayonnages pour le stockage et/ou le prélèvement d'unités de stockage et d'unités de sortie.

6. Installation selon la revendication 5,
**caractérisée en ce que**
l'emplacement (4) de stockage de petites pièces comprend des canaux de transfert pour transférer des unités de stockage et/ou de sortie d'une allée de rayonnage à une autre et/ou comprend des appareils de desserte des rayonnages qui sont aptes à accéder à des emplacements de stockage identiques à partir de différentes allées de rayonnage.

7. Installation selon l'une des revendications précédentes,
**caractérisée en ce que**
les emplacements de fourniture (17) de la zone (6) de préparation de commandes sont agencés dans l'emplacement de stockage pour petites pièces, en particulier dans une partie d'un rayonnage de l'emplacement de stockage pour petites pièces, et sont alimentés en unités de stockage par un ou plusieurs appareils de desserte des rayonnages de l'emplacement de stockage pour petites pièces.

8. Installation selon l'une des revendications précédentes,
**caractérisée en ce que**
les emplacements de fourniture (17) sont fixes et **en ce que** la voie de transport (8) est conçue de manière à pouvoir déplacer des unités de sortie devant les emplacements de fourniture, plusieurs zones (6) de préparation de commandes étant notamment agencées le long de la voie de transport, de sorte que chaque unité de sortie soit notamment apte à être transportée via un réseau vers chaque zone de préparation de commandes.

9. Installation selon l'une des revendications 5 à 8,
**caractérisée en ce que**
le ou les emplacements (5) de préparation de commandes sont agencés sur les côtés frontaux des rayonnages (2).

10. Procédé de préparation de commandes de marchandises, en particulier en utilisant une installation selon l'une des revendications précédentes, dans lequel des marchandises sont stockées dans un emplacement (4) de stockage de petites pièces dans des unités de stockage (32) et sont transférées dans une ou plusieurs unités de sortie (33) de l'unité d'expédition afin de constituer une unité d'expédition, les unités de stockage étant d'une part transférées automatiquement de l'emplacement de stockage de petites pièces vers des emplacements de fourniture (17) d'une zone (6) de préparation de commandes située à l'intérieur de l'emplacement de stockage de petites pièces et les marchandises provenant des unités de stockage prévues dans les emplacements de fourniture étant transférées à différents endroits à l'intérieur de la zone (6) de préparation de commandes dans la ou les unités de sortie disposées sur une voie de transport (8), d'autre part, d'autres marchandises sont transférées depuis au moins des unités de stockage de l'emplacement de stockage de petites pièces dans des unités de sortie, vers au moins un emplacement (5) de préparation de commandes situé à l'extérieur de l'emplacement de stockage de petites pièces, les unités de stockage étant, sur l'emplacement de préparation des commandes, transportées automatiquement vers l'emplacement de préparation de commandes sur un convoyeur, de sorte que les marchandises provenant des différentes unités de stockage transportées vers l'emplacement de préparation de commandes sont transférées de manière stationnaire vers une unité de sortie prévue au niveau de l'emplacement de préparation de commandes,
**caractérisé en ce que**
une ou plusieurs unités de sortie (33) sont stockées temporairement dans l'emplacement (4) de stockage de petites pièces entre les différentes étapes de préparation de commandes et/ou jusqu'à l'achèvement de l'ensemble de l'unité d'expédition, et les marchandises sont fournies à l'emplacement (5) de préparation de commandes dans différentes unités de stockage selon une séquence prédéterminée, en particulier au moyen d'un tampon de séquence (29), le tampon de séquence étant conçu sous la forme d'un ascenseur circulaire vertical.

11. Procédé selon la revendication 10,
**caractérisé en ce que**
l'emplacement (4) de stockage de petites pièces comprend une pluralité d'emplacements de stockage (34), les unités de stockage et les unités de sortie étant stockées dans l'emplacement de stockage de petites pièces, et en particulier une pluralité d'emplacements de stockage, de préférence chaque emplacement de stockage étant apte à être utilisé aussi bien pour le stockage d'unités de stockage que pour le stockage intermédiaire d'unités de sortie.

12. Procédé selon l'une des revendications 10 ou 11,
**caractérisé en ce que**
la ou les unités de sortie (33), en particulier une seule et même unité, sont aptes à être prélevées aussi bien au niveau de l'emplacement (5) de préparation de commandes que dans la zone (6) de préparation de commandes.

13. Procédé selon l'une des revendications 10 à 12,
**caractérisé en ce que**
certaines marchandises sont toujours fournies dans un emplacement de fourniture (17), de préférence toujours dans le même emplacement de fourniture, et/ou d'autres marchandises ne sont fournies qu'en cas de besoin, et de préférence à n'importe quel emplacement de fourniture (17).

14. Procédé selon l'une des revendications 10 à 13,
**caractérisé**
**en ce qu'**une unité de stockage contenant certaines marchandises est apte à être fournie à un emplacement de fourniture (17) et/ou à un emplacement (5) de préparation de commandes, de sorte qu'il est possible de passer d'un type de préparation de commandes à un autre pour une marchandise donnée.

15. Procédé selon l'une des revendications 10 à 14,
**caractérisé en ce que**,
en fonction de la charge de préparation de commandes, les tâches de préparation de commandes sont réparties entre les zones de préparation de commandes et les emplacements de préparation de commandes et/ou entre plusieurs zones de préparation de commandes ou emplacements de préparation de commandes, en particulier de manière automatisée, en utilisant de préférence des paramètres du groupe qui comprend une vitesse moyenne réelle, et/ou attendue, par commande, de préparation de commandes, la fréquence des mouvements nécessaires des unités de stockage et/ou des unités de sortie, la fréquence de préparation de commande d'une marchandise donnée, la performance déterminée de préparation de commandes des préparateurs et le nombre de préparateurs nécessaires.
